# EUROPÄISCHE PATENTANMELDUNG

(11) **EP 3 557 713 A1**
(43) Veröffentlichungstag der Anmeldung: **23.10.2019**
(21) Anmeldenummer: 19157922.6
(22) Anmeldetag: 19.02.2019
(51) Int. Cl.: H02J 3/06, H02J 13/00, H02J 3/12, H02J 3/18

(54) **ABSICHERUNG VON ÖFFENTLICHEN STROMNETZEN DURCH MICRO-GRIDS**

(30) Priorität: 17.04.2018 DE 102018109046
(71) Anmelder: Innogy SE, 45128 Essen (DE)
(72) Erfinder: GAUL, Armin, 59379 Selm (DE); HERMES, Roland, 45141 Essen (DE)
(74) Vertreter: Cohausz & Florack

(57) **Zusammenfassung**

Offenbart wird u.a. ein Verfahren, das Folgendes umfasst: Erfassen oder Erhalten einer Stromnetzinformation indikativ für zumindest einen Messwert, der an einem Ankoppelungspunkt zwischen einem Micro-Grid (140) und einem dem Micro-Grid übergeordneten Stromnetz (130), wobei die Stromnetzinformation zumindest teilweise basierend auf einer Sensorinformation erfasst wird oder die Stromnetzinformation erhalten wird, indem die Stromnetzinformation von dem übergeordnetem Stromnetz erhalten wird; Bestimmen einer Steuerungsinformation indikativ für eine Steuerung und/oder Regelung von zumindest einem von dem Micro-Grid umfassten Element, wobei die Steuerungsinformation zumindest teilweise basierend auf der Stromnetzinformation bestimmt wird, und wobei die Steuerungsinformation ferner derart bestimmt ist, dass die Stabilität des übergeordneten Stromnetzes gewährleistet werden kann; und Ausgeben oder Veranlassen des Ausgebens der bestimmten Steuerungsinformation. Offenbart werden ferner eine Vorrichtung zur Ausführung und/oder Steuerung dieses Verfahrens, ein System mit einer oder mehreren Vorrichtungen zur Ausführung und/oder Steuerung dieses Verfahrens und ein Computerprogramm zur Ausführung und/oder Steuerung dieses Verfahrens durch einen Prozessor.

## Beschreibung

### Gebiet

Beispielhafte Ausführungsformen der Erfindung betreffen die Absicherung von öffentlichen Stromnetzen durch Micro-Grids, die mit den öffentlichen Stromnetzen verbunden sein und daher Einfluss auf die Stabilität der öffentlichen Stromnetze haben können.

### Hintergrund

Bei zwischen dem öffentlichen Stromnetz und einem Micro-Grid gemeinsam genutzten Infrastrukturen bzw. Elementen (z. B. Leitungen) kann es zu Lastsituationen für das öffentliche Stromnetz kommen, in denen mindestens einer der beiden das gemeinsame Element nutzenden Partner (Netzbetreiber des öffentlichen Stromnetzes oder Betreiber des Micro-Grids) reagieren muss, um beispielsweise eine Überlastung oder sogar Schädigung des öffentlichen Stromnetzes zu vermeiden.

### Zusammenfassung einiger beispielhafter Ausführungsformen der Erfindung

Aufgrund der steigenden Anzahl von mit öffentlichen Stromnetzen verbundenen Micro-Grids wäre es, insbesondere um den Betriebsaufwand für das öffentliche Stromnetz überschaubar zu halten, wünschenswert, auf mitunter auftretende Lastsituationen adäquat reagieren zu können, so dass die Stabilität des öffentlichen Stromnetz gewährleistet werden kann.

Gemäß einem ersten beispielhaften Aspekt der Erfindung wird ein Verfahren offenbart, das folgendes umfasst:
- Erfassen oder Erhalten einer Stromnetzinformation indikativ für zumindest einen Messwert, der an einem Ankoppelungspunkt zwischen einem Micro-Grid und einem dem Micro-Grid übergeordneten Stromnetz, wobei die Stromnetzinformation zumindest teilweise basierend auf einer Sensorinformation erfasst wird oder die Stromnetzinformation erhalten wird, indem die Stromnetzinformation von dem übergeordnetem Stromnetz erhalten wird;
- Bestimmen einer Steuerungsinformation indikativ für eine Steuerung und/oder Regelung von zumindest einem von dem Micro-Grid umfassten Element, wobei die Steuerungsinformation zumindest teilweise basierend auf der Stromnetzinformation bestimmt wird, und wobei die Steuerungsinformation ferner derart bestimmt ist, dass die Stabilität des übergeordneten Stromnetzes gewährleistet werden kann; und
- Ausgeben oder Veranlassen des Ausgebens der bestimmten Steuerungsinformation.

In einem Ausführungsbeispiel des ersten Aspekts der Erfindung umfasst das Verfahren das Erhalten der Stromnetzinformation, das Bestimmen der Steuerungsinformation und das Veranlassen des Ausgebens der bestimmten Steuerungsinformation. In einem anderen Ausführungsbeispiel des ersten Aspekts der Erfindung umfasst das Verfahren das Erfassen der Stromnetzinformation, das Bestimmen der Steuerungsinformation und das Ausgeben der bestimmten Steuerungsinformation (insbesondere an eine andere Vorrichtung, z.B. an ein Element des Micro-Grids) zur Steuerung und/oder Regelung von diesem.

Gemäß einem zweiten beispielhaften Aspekt der Erfindung wird eine Vorrichtung offenbart, die zur Ausführung und/oder Steuerung des Verfahrens nach dem ersten Aspekt der Erfindung eingerichtet ist oder jeweilige Mittel zur Ausführung und/oder Steuerung der Schritte des Verfahrens gemäß dem ersten Aspekt der Erfindung umfasst. Dabei können entweder alle Schritte des Verfahrens gesteuert werden, oder alle Schritte des Verfahrens ausgeführt werden, oder ein oder mehrere Schritte gesteuert und ein oder mehrere Schritte ausgeführt werden. Ein oder mehrere der Mittel können auch durch die gleiche Einheit ausgeführt und/oder gesteuert werden. Beispielsweise können ein oder mehrere der Mittel durch einen oder mehrere Prozessoren gebildet sein.

Gemäß einem dritten beispielhaften Aspekt der Erfindung wird eine Vorrichtung offenbart, die zumindest einen Prozessor und zumindest einen Speicher, der Programmcode beinhaltet, umfasst, wobei der Speicher und der Programmcode eingerichtet sind, mit dem zumindest einen Prozessor eine Vorrichtung (beispielsweise die Vorrichtung mit dem Prozessor und dem Speicher) dazu zu veranlassen, zumindest das Verfahren gemäß dem ersten Aspekt der Erfindung auszuführen und/oder zu steuern. Dabei können entweder alle Schritte des Verfahrens gesteuert werden, oder alle Schritte des Verfahrens ausgeführt werden, oder ein oder mehrere Schritte gesteuert und ein oder mehrere Schritte ausgeführt werden.

Die Vorrichtung gemäß dem zweiten und/oder dem dritten Aspekt der vorliegenden Erfindung ist insbesondere ein Bestandteil (z. B. Einrichtung) des Micro-Grids. Beispielsweise ist die Vorrichtung gemäß dem zweiten und/oder dem dritten Aspekt der vorliegenden Erfindung von dem Ankoppelungspunkt, über den das Micro-Grid mit dem (öffentlichen) Stromnetz operativ (z. B. elektrisch) verbunden ist, umfasst oder an diesem derart operativ (z. B. elektrisch) angebunden, dass die Stromnetzinformation von der Vorrichtung gemäß dem zweiten und/oder dem dritten Aspekt der vorliegenden Erfindung an dem Ankoppelungspunkt erfasst bzw. ermittelt werden kann. Alternativ oder zusätzlich ist die Vorrichtung gemäß dem zweiten und/oder dem dritten Aspekt der vorliegenden Erfindung kommunikationstechnisch mit dem Micro-Grid verbunden oder kommunikationstechnisch von dem Micro-Grid umfasst, z. B. als ein Server.

Gemäß einem vierten beispielhaften Aspekt der Erfindung wird ein System offenbart, das eine oder mehrere Vorrichtungen umfasst, die eingerichtet sind zur Ausführung und/oder Steuerung des Verfahrens gemäß dem ersten Aspekt der Erfindung oder Mittel zur Ausführung und/oder Steuerung der Schritte des Verfahrens gemäß dem ersten Aspekt der Erfindung aufweisen. Dabei können entweder alle Schritte des Verfahrens gesteuert werden, oder alle Schritte des Verfahrens ausgeführt werden, oder ein oder mehrere Schritte gesteuert und ein oder mehrere Schritte ausgeführt werden.

Gemäß einem fünften beispielhaften Aspekt der Erfindung wird ein Computerprogramm offenbart, das Programmanweisungen umfasst, die einen Prozessor zur Ausführung und/oder Steuerung des Verfahrens gemäß dem ersten Aspekt der Erfindung veranlassen, wenn das Computerprogramm auf dem Prozessor läuft. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder ein oder mehrere Schritte gesteuert und ein oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, elektro-magnetischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium ist beispielsweise gegenständlich, also greifbar, und/oder nicht-transitorisch.

Diese fünf Aspekte der vorliegenden Erfindung weisen u.a. die nachfolgend beschriebenen - teilweise beispielhaften - Eigenschaften auf.

Der Ankoppelungspunkt ist insbesondere ein Element (im Nachfolgenden auch mit Infrastruktur des Micro-Grids bezeichnet), das sowohl von dem Micro-Grid als auch von dem (öffentlichen) Stromnetz gemeinsam genutzt wird. Dies kann beispielsweise ein gemeinsam genutztes Leitungsstück oder Leitungsabschnitt bzw. eine gemeinsam genutzte Leitung, und/oder aber auch eine Verbindungsstelle, die zwischen dem Micro-Grid bzw. einem von dem Micro-Grid umfassten Element und dem (öffentlichen) Stromnetz bzw. einem von dem (öffentlichen) Stromnetz umfassten Element besteht. Es kann sich beispielsweise um eine Koppelleitung von dem Micro-Grid zu dem (öffentlichen) Stromnetz handeln, um nur ein nicht-limitierendes Beispiel zu nennen.

Ein Micro-Grid kann mehrere Ankoppelungspunkte zu dem übergeordneten Stromnetz aufweisen. Ferner kann jedoch ein Micro-Grid auch autark, d.h. unabhängig vom übergeordneten Stromnetz betrieben werden. Der Gegenstand der Erfindung betrifft insbesondere den Fall, dass eine operative (z. B. elektrische) Verbindung zwischen dem Micro-Grid und dem Stromnetz besteht.

Ein Micro-Grid ist beispielsweise autark, indem es z. B. Teil von einer sogenannten Local Energy Community (LEC) ist. Eine derartige LEC ist beispielsweise ein Wohnquartier und umfasst sämtliche energietechnischen Elemente bzw. Infrastruktur(en) des Wohnquartiers. Eine derartige LEC kann beispielsweise bei einem Bilanzausgleich innerhalb des Micro-Grids zwischen Erzeugung und Verbrauch vorteilhaft sein, da beispielsweise in Deutschland dann keine Abgabe gemäß Erneuerbare-Energien-Gesetz (EEG) zu zahlen sind und deswegen derartige Modelle für die Bewohner eines solchen Wohnquartiers finanziell attraktiv sind.

Micro-Grids zeichnen sich insbesondere dadurch aus, dass eine räumliche Nähe zwischen der Erzeugung und dem Verbrauch der erzeugten Energie besteht, nämlich beispielsweise innerhalb eines Wohnquartiers.

Ferner sind derartige Micro-Grids an einem übergeordneten Verteilnetz - im Sinne dieses Gegenstands auch als öffentliches Stromnetz oder übergeordnetes Stromnetz bezeichnet - gekoppelt. Das Micro-Grid selber ist nicht frequenzgesteuert. Micro-Grids sind ferner dadurch gekennzeichnet, dass die von dem Micro-Grid umfassten Bestandteile, wie etwa Erzeugungseinrichtungen und Leitungen, nicht von einem einzelnen Eigentümer sind, sondern sich das Micro-Grid aus Bestandteilen unterschiedlicher Eigentümer zusammensetzt.

Ein von dem Micro-Grid umfasstes Element von sämtlichen von dem Micro-Grid umfassten Elementen bzw. Infrastrukturen ist beispielsweise eine Erzeugungseinrichtung (z. B. (Mikro) Blockheizkraftwerk, Windenergieanlage, Photovoltaikanlage oder dergleichen zur Erzeugung von elektrischer Energie geeignete Einrichtung) und/oder eine Last (z. B. an von dem Micro-Grid umfassten (Strom-) Leitungen angeschlossene Verbraucher, wie elektrische Einrichtungen (Haushaltsgeräte (z. B. Kühlschrank und/oder Waschmaschine), Unterhaltungselektronik, um nur einige nicht-limitierende Beispiele zu nennen)).

Die Stromnetzinformation wird beispielsweise von einem Mittel (z. B. Messeinrichtung oder Sensorik) erfasst bzw. ermittelt, die bzw. das von dem Ankoppelungspunkt umfasst sind bzw. ist, oder aber auch derart mit dem Ankoppelungspunkt operativ (z. B. elektrisch) verbunden ist, dass eine Überwachung (z. B. Messung und/oder sensorische Überwachung) des Ankoppelungspunktes durchgeführt werden kann.

Das Stromnetz ist dem Micro-Grid übergeordnet im Sinne des vorliegenden Gegenstands, indem die Stabilität des Stromnetzes gegenüber der Stabilität des mit dem Stromnetz verbundenen Micro-Grids Vorrang genießt. Entsprechend kann beispielsweise der Fall eintreten, dass eine Stromversorgung des Micro-Grids unterbrochen wird bzw. eine Stromversorgung von von dem Micro-Grid umfassten Verbrauchern unterbrochen wird, wenn dadurch die Stabilität des dem Micro-Grid übergeordneten Stromnetzes sichergestellt werden kann.

Unter der Stabilität des Stromnetzes im Sinne des vorliegenden Gegenstands wird insbesondere verstanden, dass die in dem Stromnetz herrschende Netzfrequenz konstant gehalten wird. Als Beispiel sei an dieser Stelle das europäische Versorgungsnetz als Stromnetz für Verbraucher angeführt, das stabil ist, wenn eine (Nenn-) Frequenz von 50 Hz vorliegt. Diese Frequenz kann durch ein Ab- bzw. Zuschalten und/oder Steuerung und/oder Regelung von Erzeugern und/oder Verbrauchen, wie etwa Lasten, erhöht bzw. verringert werden.

Für den Fall, dass die Stromnetzinformation erfasst wird, arbeitet ein mit dem (öffentlichen) Stromnetz operativ verbundenes Micro-Grid im oben genannten Sinne vollständig rückwirkungsfrei mit dem (öffentlichen) Stromnetz bzw. dessen Netzbetreiber.

Gemäß dem hier vorgeschlagenen Verfahren werden die Fähigkeiten der Micro-Grid-Steuerung dahingehend erweitert, dass der Micro-Grid Betreiber zu jedem Zeitpunkt sicherstellt, dass der öffentliche Netzbetrieb des übergeordneten Stromnetzes keine Einschränkung erfährt.

Es ist derart insbesondere eine dezentrale Lösung realisiert, die auf das mit dem (öffentlichen Stromnetz) gemeinsam genutzte Element (z. B. Leitung, Stück, Infrastruktur des übergeordneten Stromnetzes) achtet, ohne aktives Zutun (z. B. Ausführen von einem Verfahrensschritt) des übergeordneten Stromnetzes.

Für den Fall, dass die Stromnetzinformation erhalten wird, dient das Micro-Grid ebenfalls als Absicherung der öffentlichen Stromversorgung durch das Stromnetz.

Die Funktionalität des Micro-Grids kann zusätzlich jedoch auch genutzt werden, um bei einer Grenzwertverletzung in überlagerten Netzbereichen des Stromnetzes eine gezielte Lastflussbeeinflussung zu ermöglichen.

Die dargestellte Steuerungs- und/oder Regelungsmöglichkeit über die bestimmte Steuerungsinformation des Micro-Grids ermöglicht diese Option für Poolungen, also eine Vielzahl von mit dem (öffentlichen) Stromnetz operativ verbundenen Micro-Grids und kann somit eine mitunter bestehende Anforderung an eine (n-1)-sichere Auslegung der öffentlichen Netzinfrastruktur des Stromnetzes reduzieren.

Gemäß einer beispielhaften Ausführungsform aller Aspekte der Erfindung wird die Sensorinformation basierend auf einer sensorischen Überwachung und/oder Messung des Ankoppelungspunktes erfasst.

Zu diesem Zweck wird beispielsweise der Ankoppelungspunkt (z. B. die gemeinsam genutzten Leitungsabschnitte zwischen Micro-Grid und Stromnetz) so gemessen und sensorisch überwacht, dass aus den Messwerten derart Steuersignale repräsentiert von der bestimmten Steuerungsinformation abgeleitet werden können, dass eine Micro-Grid Steuerung und/oder Regelung (z. B. von einem von dem Micro-Grid umfassten Element) eine einer Überlastung bzw. Grenzwertverletzung des Stromnetzes entgegenwirkende Aktion auslösen kann. Derart ist beispielsweise eine Weitbereichsregelung möglich, d.h. z. B. eine gezielte Nutzung von einer Stromnetzinformation oder Sensorinformation, die zumindest teilweise basierend auf entfernten Sensordaten des Netzbetreibers bestimmt wird. Beispielsweise kann dies eine Belastung des Transformators (Trafo) sein. Ferner können beispielsweise einfache Regeln gelten, z. B. wenn ein Trafo zu hoch belastet, dann wird die Steuerungsinformation derart bestimmt, dass eine Leistungsentnahme aus dem öffentlichen Netz reduziert wird. Alternativ oder zusätzlich kann auch die Spannung am letzten Netzknoten im Abgang als Steuerungsgröße verwendet werden, indem die Steuerungsinformation zur Steuerung und/oder Regelung dieses Netzknotens entsprechend bestimmt wird.

Die Überlastung bzw. Grenzwertverletzung des Stromnetzes kann beispielsweise durch entsprechende die Überlastung bzw. die Grenzwertverletzung des Stromnetzes charakterisierende Parameter (z. B. Größen und/oder Intervalle von Spannungs- und/oder Stromwerten (z. B. Amplituden) und/oder eine Blindleistungsbilanz) definiert sein. Derartige Parameter können beispielsweise zum Vergleich herangezogen werden, so dass beispielsweise ein Vergleich zwischen der Stromnetzinformation und derartigen Parametern durchgeführt wird, um ermitteln zu können, ob eine Überlastung bzw. Grenzwertverletzung des (öffentlichen) Stromnetzes vorliegt oder nicht.

Gemäß einer beispielhaften Ausführungsform aller Aspekte der Erfindung repräsentiert, für den Fall, dass die Stromnetzinformation erhalten wird, diese zumindest einen Messwert des Ankoppelungspunktes zwischen dem Micro-Grid und dem Stromnetz, wobei ferner diese Stromnetzinformation seitens des Stromnetzes erfasst oder die Erfassung der Stromnetzinformation seitens des Stromnetzes veranlasst wird.

Entsprechend wird aktiv seitens des Stromnetzes zumindest eine Stromnetzinformation des (öffentlichen) Stromnetzes erfasst und diese zumindest eine Stromnetzinformation an das Micro-Grid übermittelt. Diese erhält das Micro-Grid in diesem Ausführungsbeispiel. Dann erfolgt eine Steuerung und/oder Regelung des Micro-Grids, um beispielsweise vom öffentlichen Stromnetz geforderte Anforderungen liefern zu können.

In diesem Fall kann also eine Micro-Grid-Steuerung und/oder -Regelung beispielsweise dafür sorgen, dass die Stabilität des (öffentlichen) Stromnetzes gewährleistet (z. B. aufrechterhalten) wird.

Dann kann beispielsweise die Steuerungsinformation derart bestimmt sein, dass an dem Ankoppelungspunkt ein oder mehrere vorgegebenen Parameter (diese werden dann z. B. vom öffentlichen Stromnetz erhalten) eingestellt werden, wie etwa ein bestimmter Spannungs- und/oder Stromwert. Alternativ kann bzw. können diese Parameter beispielsweise nicht explizit seitens des öffentlichen Stromnetzes vorgegeben sein, sondern von dem Micro-Grid ausgehend ermittelt werden, z. B. basierend auf der Stromnetzinformation.

Gemäß einer beispielhaften Ausführungsform aller Aspekte der Erfindung repräsentiert der Messwert des Ankoppelungspunktes einen oder mehrere der folgenden Parameter i) bis v):
i) Strom an dem zumindest einen Ankoppelungspunkt;
ii) Spannung (z. B. Spannungsbetrag und Spannungswinkel) an dem zumindest einen Ankoppelungspunkt;
iii) (z. B. Blind-) Leistungsbilanz an dem zumindest einen Ankoppelungspunkt;
iv) Wirk- und/oder Blindleistung; und
v) Wirk- und/oder Blindlast.

Das Bestimmen der Steuerungsinformation erfolgt beispielsweise derart, dass eine oder mehreren der folgenden Bedingungen berücksichtigt werden:
- vordefinierte Parameter, so dass Grenzen gemäß der Parameter eingehalten werden (z. B. Grenzen gemäß definierter Spannungs- und/oder Stromwerte und/oder Leistungsbilanz); und
- dynamische Parameter, so dass beispielsweise eine Aktion (z. B. Steuerung/Regelung von Erzeugung/Lasten, die von dem Micro-Grid umfasst sind) in Abhängigkeit von gemessenen Parametern erfolgt, und/oder eine Aktion, die zu Einschränkungen innerhalb des Micro-Grids führen kann, nicht jedoch zu Einschränkungen des übergeordneten Stromnetzes.

Gemäß einer beispielhaften Ausführungsform aller Aspekte der Erfindung erfolgt das Ausgeben oder das Veranlassen des Ausgebens der Steuerungsinformation an zumindest ein Element des Micro-Grids, wobei ferner eine Steuerung und/oder Regelung von diesem zumindest einen Element des Micro-Grids basierend auf der Steuerungsinformation erfolgt, an das die Steuerungsinformation ausgegeben oder an das die Ausgabe der Steuerungsinformation veranlasst wird.

Die Ausgabe bzw. die Veranlassung deren Ausgabe erfolgt beispielsweise, indem die Steuerungsinformation an zumindest ein Element des Micro-Grids übermittelt wird. Z. B. kann das Übermitteln über ein Kommunikationsnetz erfolgen, z. B. das Internet, über ein Local Area Network (LAN), über ein drahtloses Kommunikationsnetz (z. B. gemäß dem Wireless Local Area Network (WLAN) und/oder Bluetooth Standard), über ein Mobilfunknetz (z. B. gemäß dem General Packet Radio Service (GPRS), Universal Mobile Telecommunications System (UMTS), oder Long Term Evolution (LTE)-Standard, oder über eine (z. B. lokale) Funklösung (z. B. gemäß der Long Range Wide Area Network (LoRaWAN) Spezifikation), um nur einige nicht-limitierende Beispiele zu nennen) das zur Kommunikation zwischen den von dem Micro-Grid umfassten Elementen verwendet werden kann. Es versteht sich, dass dies voraussetzt, dass diejenigen Elemente des Micro-Grids, welche miteinander kommunizieren sollen, eine oder mehrere zur derartigen Kommunikation ausgebildete Kommunikationsschnittstellen umfassen oder mit diesen verbindbar sind.

Gemäß einer beispielhaften Ausführungsform aller Aspekte der Erfindung wird der Messwert des Ankoppelungspunktes zwischen dem Micro-Grid und dem Stromnetz von zumindest einer Sensorik erfasst, auf Basis des von der Sensorik ermittelten Messwertes ein Zustand des Stromnetzes abgeleitet wird.

Der Zustand des Stromnetzes wird beispielsweise aus dem ermittelten Messwert (oder alternativ: aus der erfassten (Sensor-) Information von der Sensorik) bestimmt bzw. abgeleitet.

Die Sensorik kann beispielsweise von dem Ankopplungspunkt umfasst sein. Alternativ kann die Sensorik von dem öffentlichen Stromnetz umfasst sein und derart ausgebildet sein, dass nach dem Ermitteln des Messwertes dieser als Sensorinformation und/oder eine zumindest teilweise darauf basierend ermittelte Stromnetzinformation an das Micro-Grid übermittelt (z. B. gemeldet) wird.

Die Sensorik ist beispielsweise ein Messwandler für Strom und/oder Spannung, der beispielsweise mit dem Ankopplungspunkt operativ (z. B. elektrisch) verbunden ist, oder alternativ von dem Ankopplungspunkt umfasst ist.

Die an das Micro-Grid übermittelte Sensorinformation oder die übermittelte und dann erhaltene Stromnetzinformation repräsentiert beispielsweise den Zustand des öffentlichen Stromnetzes (z. B. unmittelbar).

Gemäß einer beispielhaften Ausführungsform aller Aspekte der Erfindung ist der Zustand des Stromnetzes indikativ für eine Lastsituation des Stromnetzes, wobei die Steuerungsinformation ferner unter Berücksichtigung der Lastsituation und zur Gewährleistung der Stabilität des Stromnetzes bestimmt wird.

Die Lastsituation kann beispielsweise zumindest teilweise basierend auf einem von dem Messwert des Ankoppelungspunktes repräsentierten Parameter, der einen oder mehrere der vorstehend beschriebenen Parameter i) bis v) umfasst bzw. repräsentiert, ermittelt werden.

Die Lastsituation ist indikativ für eine Betriebsmittelüberlastung und/oder Spannungsbandverletzung des öffentlichen Stromnetzes. Eine derartige Betriebsmittelüberlastung kann die Versorgungssicherheit des öffentlichen Stromnetzes negativ beeinflussen, da beispielsweise thermische Reserven der Betriebsmittel vollständig ausgereizt bzw. überreizt werden. Beispielsweise kann ferner die Lastsituation mittels einer Lastflussberechnung ermittelt werden. Hierbei wird beispielsweise zunächst eine Bestimmung des Betriebszustands von einem oder mehreren von dem öffentlichen Stromnetz umfassten Elemente (z. B. Betriebsmittel), insbesondere von denjenigen durchgeführt, die z. B. von dem Ankopplungspunkt umfasst oder mit diesem operativ (z. B. elektrisch) verbunden sind. Beispielsweise wird das Spannungsprofil des Ankopplungspunktes ermittelt. Dies kann beispielsweise zumindest teilweise basierend auf (komplexen) Knotenspannungen ermittelt werden, die z. B. an dem Ankopplungspunkt vorliegen. An dem Ankopplungspunkt kann einer oder es können mehrere der Parameter i) bis v) bestimmt werden, die einen Rückschluss auf die Lastsituation und somit auf eine Auslastung der Elemente (z. B. Betriebsmittel) des öffentlichen Stromnetzes zulassen.

Gemäß einer beispielhaften Ausführungsform aller Aspekte der Erfindung erfolgt die Steuerung und/oder Regelung des zumindest einen Elementes des Micro-Grids derart, dass eine Überlastung und/oder Grenzwertverletzung entgegenwirkende Aktion von dem Element durchgeführt wird.

Die Steuerungsinformation kann beispielsweise ein Aus- oder Einschalten zumindest einen Elementes bewirken für den Fall, dass das Element z. B. ein von dem Micro-Grid umfasster Verbraucher (z. B. Waschmaschine, oder Unterhaltungselektronik) ist. Ferner kann die Steuerungsinformation bewirken, dass seitens von dem Micro-Grid umfasste Elemente bzw. ein (bestimmtes) von dem Micro-Grid umfasstes Element keine benötigte elektrische Energie (mehr) aus dem übergeordneten Stromnetz bezieht. Um ein weiteres Beispiel zu nennen, die Steuerungsinformation kann beispielsweise bewirken, dass von dem Micro-Grid umfasste Erzeugungseinrichtungen keine elektrische Energie (mehr) in das übergeordnete Stromnetz einspeisen. Ferner kann die Steuerungsinformation eine Steuerung und/oder Regelung der Erzeugungseinrichtungen des Micro-Grids bewirken, z. B. eine Erhöhung oder Verringerung der von der Erzeugungseinrichtung erzeugten elektrischen Energie.

Die Steuerungsinformation kann beispielsweise eine Steuerung und/oder Regelung von einem oder mehreren Transformatoren, die von dem Micro-Grid umfasst sind bewirken.

Die Steuerungsinformation kann beispielsweise eine Steuerung und/oder Regelung von einem oder mehreren Speichern, die von dem Micro-Grid umfasst sind, bewirken.

Die Steuerungsinformation kann beispielsweise eine Steuerung und/oder Regelung von einem oder mehreren ferngesteuerten Lasttrennschaltern bewirken, so dass Lasten, die von dem Micro-Grid umfasst sind, von dem Micro-Grid getrennt werden können, so dass diese keinen Einfluss mehr auf das übergeordnete Stromnetz haben können.

Die vorstehende Anführung zeigt lediglich nicht-limitierende Beispiele auf. In Abhängigkeit der konkret von dem Micro-Grid umfassten Elemente bzw. der mit dem Micro-Grid operativ verbundenen Elemente kann eine entsprechende Steuerungsinformation weitere Aktionen bewirken, die individuell eine Steuerung und/oder Regelung des jeweiligen Elementes bewirken können.

Derart kann eine einer mitunter auftretenden Überlastung und/oder Grenzwertverletzung des öffentlichen Stromnetzes entgegenwirkende Aktion von dem Element des Micro-Grids durchgeführt werden.

Gemäß einer beispielhaften Ausführungsform aller Aspekte der Erfindung ist die Überlastung und/oder Grenzwertverletzung von einer Betriebsmittelüberlastung und/oder Spannungsbandverletzung des Stromnetzes charakterisiert.

Die Vermeidung einer Spannungsbandverletzung des Stromnetzes dient beispielsweise einer Einhaltung der Versorgungsqualität des Stromnetzes. Die Vermeidung einer Betriebsmittelüberlastung dient beispielsweise einer Gewährleistung der Versorgungssicherheit von durch das öffentliche Stromnetz versorgten Verbrauchern.

Beispielsweise kann es bei einer hohen Einspeisung von elektrischer Energie in das öffentliche Stromnetz durch das Micro-Grid (z. B. verursacht von einer hohen Einspeisung von elektrischer Energie von einer oder mehreren Photovoltaikanlagen des Micro-Grids), und beispielsweise gleichzeitig bei einer niedrigen Last dazu kommen, dass es durch die verursachte Spannungserhöhung an dem Ankopplungspunkt zu einer Spannungsbandverletzung kommen kann.

Gemäß einer beispielhaften Ausführungsform aller Aspekte der Erfindung wird die Steuerungsinformation ferner zumindest teilweise basierend auf einem oder mehreren vordefinierten Steuerungsparametern bestimmt.

Gemäß einer beispielhaften Ausführungsform aller Aspekte der Erfindung sind der eine oder die mehreren vordefinierten Steuerungsparameter mit dem zumindest einen Element des Micro-Grids verknüpft, so dass durch die Ausgabe oder das Veranlassen der Ausgabe der Steuerungsinformation eine Steuerung und/oder Regelung des zumindest einen Elementes von dem Micro-Grid gemäß dem einen oder den mehreren vordefinierten Steuerungsparametern erfolgt.

Der eine oder die mehreren Steuerungsparameter repräsentieren beispielsweise individuelle Aktionen für ein jeweiliges von dem Micro-Grid umfasstes Element. Beispielsweise kann ein entsprechender Steuerungsparameter eine Regelung eines Transformators des Micro-Grids, oder eine Regelung eines Speichers des Micro-Grids bewirken, um nur einige nicht-limitierende Beispiele zu nennen.

Gemäß einer beispielhaften Ausführungsform aller Aspekte der Erfindung umfasst das Verfahren ferner:
- Detektieren, dass eine Lastsituation des Stromnetzes vorliegt, die die Stabilität des Stromnetzes gefährdet, wobei das Detektieren in vordefinierten oder nach vorbestimmten Regeln bestimmten Zeitabständen erfolgt, und wobei das Detektieren das Ermitteln der Sensorinformation umfasst.

Das Detektieren kann entweder von dem Micro-Grid (z. B. eine zentrale Einrichtung (z. B. Server), der von Micro-Grid umfasst ist) durchgeführt werden. Alternativ oder zusätzlich kann der Schritt des Detektierens seitens des Stromnetzes, z. B. von einer Einrichtung des Stromnetzes (z. B. zentrale Einrichtung, oder Sensorik umfassende Einrichtung des Stromnetzes) durchgeführt werden. Für den Fall, dass der Schritt des Detektierens seitens des Stromnetzes durchgeführt wird, erfolgt insbesondere eine Übermittlung einer Information an das Micro-Grid (z. B. eine zentrale Einrichtung des Micro-Grids, z. B. Server), wobei nach dem Detektieren die übermittelte Information indikativ dafür ist, dass eine Lastsituation im Stromnetz vorliegt, also detektiert wurde.

Gemäß einer beispielhaften Ausführungsform aller Aspekte der Erfindung erfolgt das Erhalten der Stromnetzinformation auf Protokollebene zwischen dem Micro-Grid und dem Stromnetz, oder basierend auf von jeweiligen Sensoriken des Stromnetzes ermittelten Informationen.

Der erste Fall, wonach das Erhalten der Stromnetzinformation auf Protokollebene zwischen dem Micro-Grid und dem Stromnetz erfolgt, spiegelt den Fall wieder, dass das (öffentliche) Stromnetz intelligent ist. Dann erfolgt ein Austausch der Stromnetzinformation auf Protokollebene, z. B. auf Schicht 5 bis Schicht 7 des sieben Schichten umfassenden OSI-Modells. Zusätzlich können weitere Informationen, z. B. eine oder mehrere Sensorinformationen, eine oder mehrere Steuerungsinformation, einer oder mehrere Steuerungsparameter, oder sonstige Parameter, Messwerte und/oder Informationen auf Protokollebene zwischen dem Micro-Grid bzw. von diesem umfasste Elemente oder Einrichtungen (z. B. Server) und dem (öffentlichen) Stromnetz bzw. von diesem umfasste Elemente oder Einrichtungen (z. B. Server) erfolgen.

Es besteht also beispielsweise eine Kommunikationsverbindung zwischen dem Micro-Grid und dem (öffentlichen) Stromnetz bzw. zumindest einem Teil des (öffentlichen) Stromnetzes.

Der zweite Fall spiegelt eine adaptive Sensorik des Stromnetzes wider, wobei die jeweilige Sensorik ihre ermittelten Informationen an das Micro-Grid (z. B. eine koordinierende oder zentrale Einrichtung (z. B. Server) des Micro-Grids oder mit dem Micro-Grid verbundene und entsprechende Einrichtung) übermittelt. Für den Fall, dass mehrere solcher Informationen von mehr als einer Sensorik des Stromnetzes erhalten werden, kann beispielsweise die Stromnetzinformation zumindest teilweise basierend auf diesen mehr als einer erhaltenen Information durchgeführt werden.

Die oben beschriebenen, zunächst grundsätzlich für sich alleine stehenden Ausführungsformen und beispielhaften Ausgestaltungen aller Aspekte der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Figuren

Es zeigen:
- Fig. 1:: eine schematische Darstellung einer beispielhaften Ausführungsform eines Systems gemäß der vorliegenden Erfindung;
- Fig. 2:: ein Flussdiagramm einer beispielhaften Ausführungsform eines Verfahrens, das im Kontext der vorliegenden Erfindung beispielsweise von der Einrichtung 110 des Systems der Fig. 1 ausgeführt werden kann; und
- Fig. 3:: eine schematische Darstellung einer beispielhaften Ausführungsform einer Vorrichtung gemäß der vorliegenden Erfindung.

### Detaillierte Beschreibung einiger beispielhafter Ausführungsformen der Erfindung

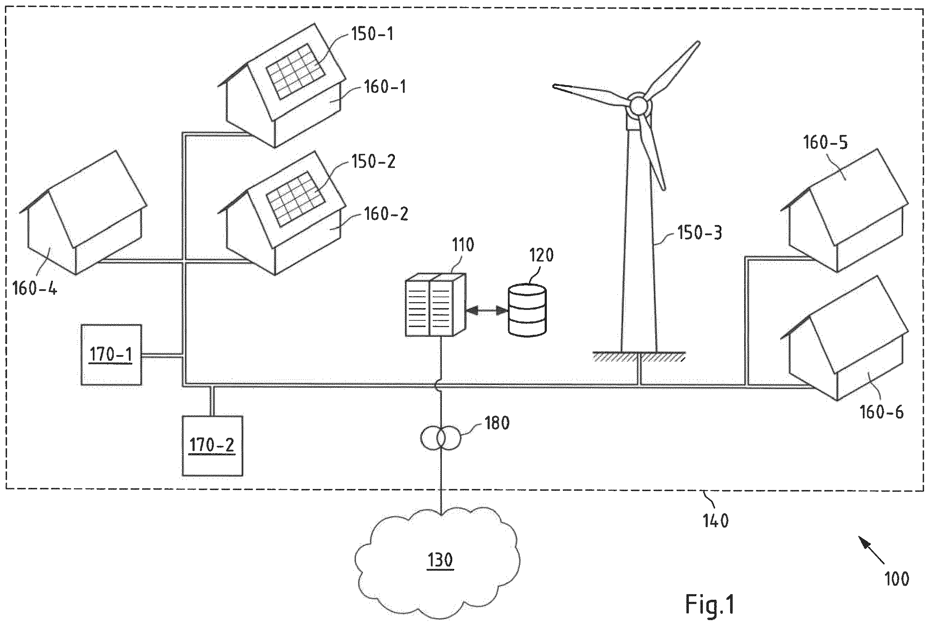

Fig. 1 ist eine schematische Darstellung einer beispielhaften Ausführungsform eines Systems 100 gemäß der vorliegenden Erfindung.

Fig. 1 zeigt ein Micro-Grid 140 mit Verteilsträngen 141 umfassend die Unterverteilstränge 141a bis 141c. Das Micro-Grid 140 ist über einen Transformator 180 mit einem übergeordneten Stromnetz 130 (z. B. ein Mittelspannungsnetz) verbunden. Das Stromnetz 130 kann mit mehreren von solchen Micro-Grids (in Fig. 1 nicht dargestellt) nach Art des Micro-Grids 140 verbunden sein.

Das Stromnetz 130 kann eine oder mehrere Einrichtungen (in Fig. 1 nicht dargestellt) umfassen, die beispielsweise jeweils eine Sensorik umfassen können, mit denen Messwerte an dem Transformator 180 als Ankoppelungspunkt erfasst werden können. Diese Messwerte, repräsentiert beispielsweise von einer Stromnetzinformation, können von dem Stromnetz 130 an das Micro-Grid, z. B. an den Server 110 als Steuereinrichtung des Micro-Grids übermittelt werden.

An dem Micro-Grid 140 bzw. an den Strängen 141a bis 141c des Micro-Grids 140 sind Hausanschlüsse 160-1 bis 1606, sowie Speicher 170-1 bis 170-2, und zudem auch Erzeugungseinrichtungen 150-1 bis 150-3 angeordnet bzw. elektrisch verbunden.

Die Hausanschlüsse 160-1 bis 160-6 sind nicht nur elektrische Verbraucher, sondern auch teilweise Erzeuger von elektrischer Energie. So sind beispielsweise die Erzeugungseinrichtungen 150-1 und 150-2 vorliegend als Photovoltaikanlagen ausgebildet, und von den Hausanschlüssen 160-1 sowie 160-2 umfasst. Die Erzeugungseinrichtung 150-3 des Micro-Grids ist vorliegend als Windenergieanlage ausgebildet.

Der Server 110 ist mit der optionalen Datenbank 120 verbunden. Der Server 110 kann beispielsweise eine Schalteinrichtung für das Micro-Grid 140 ausbilden, so dass es möglich ist, einzelne Elemente des Micro-Grids 140 (vorliegend z. B. Hausanschlüsse 160-1 bis 160-6, Erzeugungseinrichtungen 150-1 bis 150-3, sowie die Speicher 170-1 und 170-2) gezielt mit elektrischer Energie zu versorgen, so dass beispielsweise eine Steuerung und/oder Regelung dieser Elemente des Micro-Grids möglich ist.

Um die Stabilität des übergeordneten Stromnetzes 130 gewährleisten zu können, besitzt vorliegend das Micro-Grid 140 mit dem Stromnetz 130 einen Ankopplungspunkt, vorliegend den Transformator 180. Der Server 110 umfasst vorliegend Sensorik, die es ermöglicht, eine Stromnetzinformation indikativ für zumindest einen Messwert, der an dem Transformator 180 als Ankoppelungspunkt zwischen dem Micro-Grid und dem dem Micro-Grid 140 übergeordneten Stromnetz 130, zu erfassen. Basierend auf dieser Stromnetzinformation bestimmt der Server 110 eine Steuerungsinformation, beispielsweise für den Fall, dass basierend auf der erfassten Stromnetzinformation ermittelt wurde, dass eine kritische Lastsituation des Stromnetzes 130 (z. B. eine Betriebsmittelüberlastung) vorliegt. Anschließend kann die Steuerungsinformation ausgegeben werden, z. B. an einen der Speicher 170-1 bzw. 170-2 und an eine oder mehreren der Erzeugungseinrichtungen 150-1 bis 150-3, so dass die von den Erzeugungseinrichtungen 150-1 bis 150-3 erzeugte elektrische Energie beispielsweise anstelle von einer Einspeisung über den Transformator in das Stromnetz 130 in den entsprechenden Speicher erfolgt.

Optional kann ferner eine Stromnetzinformation indikativ für zumindest eine entfernt liegenden Messstelle bzw. einen entfernt liegenden Messpunkt im Netz der öffentlichen Stromversorgung (in Fig. 1 nicht dargestellt) erfasst oder erhalten werden. Dies kann beispielsweise eine Strommessung am nächsten dem Transformator 180 übergeordneten Transformator (in Fig. 1 nicht dargestellt) sein.

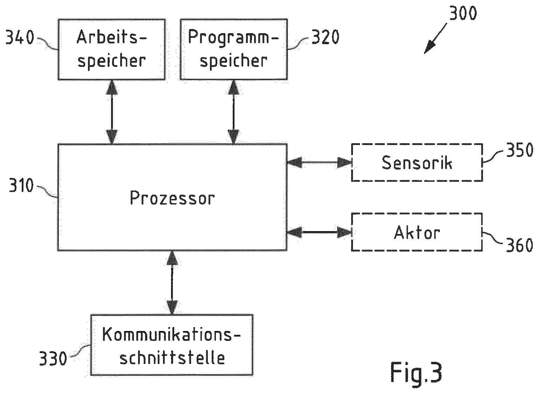

Fig. 3 zeigt eine schematische Darstellung einer beispielhaften Ausführungsform einer Vorrichtung 300, die im Kontext der vorliegenden Erfindung eingesetzt werden kann.

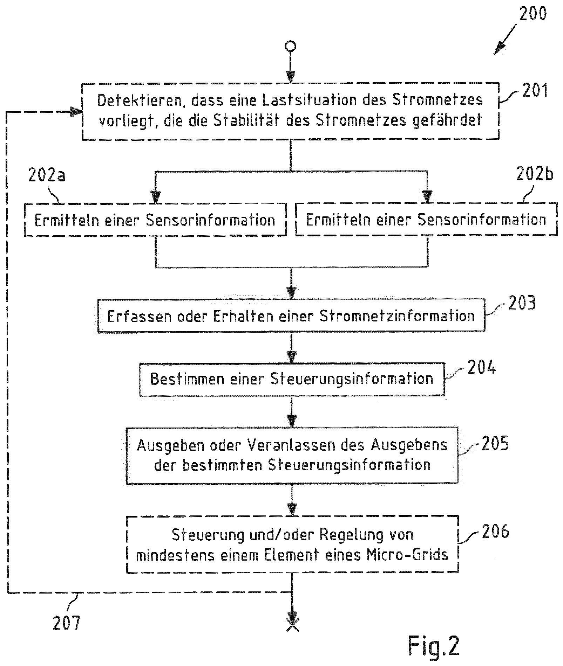

Die Vorrichtung 300 kann beispielsweise die Vorrichtung 110 (Server) nach Fig. 1 repräsentieren (und dann beispielsweise das Verfahren des Flussdiagramms 200 nach Fig. 2 ausführen). Die Vorrichtung 300 kann beispielsweise auch eine entsprechende Vorrichtung, die in Fig. 1 von dem Stromnetz 130 umfasst ist, repräsentieren (und dann beispielsweise das Verfahren des Flussdiagramms 200 nach Fig. 2 ausführen, oder alternativ zusammen mit der Vorrichtung 110 nach Fig. 1 das Verfahren des Flussdiagramms 200 nach Fig. 2 ausführen). Ferner kann die Vorrichtung 300 beispielsweise von einem von einem Micro-Grid umfassten Element (z. B. Elemente 150-1 bis 150-3, 160-1 bis 160-6, 170-1 bis 170-2) umfasst sein, insbesondere kann derart mittels eines Aktors 360 eine Steuerung und/oder Regelung des entsprechenden Elementes erfolgen.

Vorrichtung 300 umfasst einen Prozessor 310 mit zugeordnetem Arbeitsspeicher 340 und Programmspeicher 320. Der Prozessor 310 führt beispielsweise Programmanweisungen aus, die im Programmspeicher 320 gespeichert sind. Die Programmanweisungen führen das Verfahren gemäß dem ersten Aspekt der Erfindung aus und/oder steuern dieses. Damit enthält der Programmspeicher 320 ein Computerprogramm nach einem beispielhaften Aspekt der Erfindung und stellt ein Computerprogrammprodukt zu dessen Speicherung dar. Vorrichtung 300 stellt ein Beispiel einer Vorrichtung gemäß dem zweiten Aspekt der Erfindung dar.

Der Programmspeicher 320 kann beispielsweise ein persistenter Speicher, wie beispielsweise ein Read-Only Memory (ROM)-Speicher sein. Der Programmspeicher 320 kann beispielsweise fest mit dem Prozessor 310 verbunden sein, kann aber alternativ auch lösbar mit dem Prozessor 310 verbunden sein, beispielsweise als Speicherkarte, Diskette oder optisches Datenträgermedium (z. B. eine CD oder DVD). In dem Programmspeicher 320, oder in einem separaten Speicher, können auch weitere Informationen abgespeichert sein.

Der Arbeitsspeicher 340 wird beispielsweise zur Speicherung temporärer Ergebnisse während der Abarbeitung der Programmanweisungen genutzt, es handelt sich hierbei beispielsweise um einen flüchtigen Speicher, wie beispielsweise einen Random-Access-Memory (RAM)-Speicher.

Der Prozessor 310 ist ferner operativ mit einer Kommunikationsschnittstelle 330 verbunden, mit der beispielsweise ein Informationsaustausch mit anderen Vorrichtungen möglich ist (siehe z. B. die Pfeile bzw. Verbindungen zwischen den von dem System 100 gemäß Fig. 1 umfassten Entitäten bzw. Elemente).

Die Vorrichtung 300 kann auch weitere Komponenten enthalten oder umfassen. Beispielsweise ist bzw. sind insbesondere eine oder mehrere Sensoriken 350 zur Ermittlung von einer Sensorinformation (vgl. auch Schritt 202a bzw. 202b des Flussdiagramms 200 nach Fig. 2) vorhanden, die beispielsweise zur Erfassung (z. B. Messung) von Messwerten an einem Ankopplungspunkt zwischen einem Micro-Grid (z. B. Micro-Grid 140 nach Fig. 1) und einem dem Micro-Grid übergeordneten Stromnetz (z. B. Stromnetz 130 nach Fig. 1) als strukturelle und/oder funktionale Einheit eingerichtet ist bzw. sind und mit dem Prozessor 310 operativ verbunden bzw. von diesem umfasst ist bzw. sind. Die Vorrichtung 300 kann ferner einen oder mehrere Aktoren 360 als strukturelle und/oder funktionale Einheit(en) umfassen, die mit dem Prozessor 310 operativ verbunden sind. Der Aktor 360 kann beispielsweise konfiguriert sein, eine Steuerung und/oder Regelung von einem von dem Micro-Grid umfassten Element zu bewirken (vgl. auch Schritt 206 des Flussdiagramms 200 nach Fig. 2).

Fig. 2 stellt ein Flussdiagramm 200 einer beispielhaften Ausführungsform eines Verfahrens dar, das z. B. von einer Vorrichtung 110 im Kontext der vorliegenden Erfindung zur Absicherung eines öffentlichen Stromnetzes durch ein Micro-Grid ausgeführt werden kann. Alternativ oder zusätzlich kann das Flussdiagramm 200 von einer Vorrichtung, die von dem Stromnetz umfasst ist, ausgeführt werden.

In einem optionalen ersten Schritt 201 erfolgt ein Detektieren, dass eine Lastsituation des Stromnetzes vorliegt, die die Stabilität des Stromnetzes gefährdet. Der Schritt 201 erfolgt beispielsweise, in dem ein Ankopplungspunkt zwischen einem Micro-Grid (z. B. Micro-Grid 140 nach Fig. 1) und einem dem Micro-Grid übergeordneten Stromnetz (z. B. Stromnetz 130 nach Fig. 1) sensorisch überwacht wird. Entsprechend kann der Schritt 201 sowohl seitens des Micro-Grids, als auch seitens des Stromnetzes 130 durchgeführt werden.

In einem optionalen zweiten Schritt 201 erfolgt ein Ermitteln einer Sensorinformation. Die Schritte 201a und 201b unterscheiden sich dahingehend, dass der Schritt 201a von der Vorrichtung, die von dem Micro-Grid umfasst ist, durchgeführt wird. Dies umfasst auch den Fall, dass der Schritt von einem Element bzw. einer Einrichtung durchgeführt wird, das bzw. die von einem Ankopplungspunkt zwischen dem Micro-Grid und dem Stromnetz der Schritt 201a umfasst ist. Hingegen wird das Ermitteln einer Sensorinformation gemäß dem Schritt 201b von einer Vorrichtung bzw. Einrichtung durchgeführt, die von dem Stromnetz umfasst ist. Entsprechend erfolgt der Schritt 201a seitens des Micro-Grids. Der Schritt 201b erfolgt seitens des dem Micro-Grid übergeordneten Stromnetzes.

In einem dritten Schritt 203 erfolgt ein Erfassen oder Erhalten einer Stromnetzinformation. Für den Fall, dass das Flussdiagramm 200 von einer Vorrichtung des Micro-Grids durchgeführt wird, wird die Stromnetzinformation erfasst, z. B. mittels einer Sensorik, die dazu konfiguriert ist, Messwerte an dem Ankopplungspunkt zwischen Micro-Grid und übergeordnetem Stromnetz zu erfassen (z. B. messen). Für den Fall, dass das Flussdiagramm 200 von einer Vorrichtung des Stromnetzes durchgeführt wird, erhält in Schritt 203 eine Vorrichtung (z. B. Server 110 nach Fig. 1) die Stromnetzinformation, so dass diese Vorrichtung in dem Schritt 203 die Stromnetzinformation entsprechend nicht selber erfasst.

In einem vierten Schritt 204 erfolgt ein Bestimmen einer Steuerungsinformation. Das Bestimmen der Steuerungsinformation wird beispielsweise mittels eines von der Vorrichtung, die das Flussdiagramm 200 ausführt, umfassten Prozessors durchgeführt. Das Bestimmen der Steuerungsinformation kann beispielsweise ferner eine oder mehrere Abfragen von in einer Datenbank (z. B. Datenbank 120 nach Fig. 1) hinterlegten Informationen, z. B. Steuerungsparameter für ein oder mehrere von dem Micro-Grid umfasste Elemente, umfassen.

In einem fünften Schritt 205 erfolgt ein Ausgeben oder Veranlassen des Ausgebens der bestimmten Steuerungsinformation. Die Steuerungsinformation wird beispielsweise von der Vorrichtung 110 nach Fig. 1 an ein Element des Micro-Grids 140 nach Fig. 1, z. B. an einen Speicher 170-1 nach Fig. 1 übermittelt. Anschließend kann der Speicher 170-1 beispielsweise gespeicherte elektrische Energie in das Stromnetz ausspeisen als basierend auf der erhaltenen Steuerungsinformation erfolgte Steuerung und/oder Regelung des Speichers 170-1.

In einem optionalen sechsten Schritt 206 erfolgt eine Steuerung und/oder Regelung von mindestens einem Element eines Micro-Grids basierend auf der in dem Schritt 204 bestimmten Steuerungsinformation.

Die Schritte 201 bis 206 können beispielsweise in regelmäßigen zeitlichen Abständen, z. B. vordefinierten zeitlichen Abständen, und/oder in Abhängigkeit eines Ereignisses, z. B. eine Betriebsmittelüberlastung des Stromnetzes wurde in dem Schritt 201 detektiert, wiederholt werden. Dies ist in dem Flussdiagramm 200 schematisch durch den Pfeil 207, der auf den Schritt 201 zurückführt, dargestellt.

Die in dieser Spezifikation beschriebenen beispielhaften Ausführungsformen / Ausführungsbeispiele der vorliegenden Erfindung sollen sowohl einzeln als auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren, umfassend:
- Erfassen oder Erhalten einer Stromnetzinformation indikativ für zumindest einen Messwert, der an einem Ankoppelungspunkt zwischen einem Micro-Grid und einem dem Micro-Grid übergeordneten Stromnetz, wobei die Stromnetzinformation zumindest teilweise basierend auf einer Sensorinformation erfasst wird oder die Stromnetzinformation erhalten wird, indem die Stromnetzinformation von dem übergeordnetem Stromnetz erhalten wird;
- Bestimmen einer Steuerungsinformation indikativ für eine Steuerung und/oder Regelung von zumindest einem von dem Micro-Grid umfassten Element, wobei die Steuerungsinformation zumindest teilweise basierend auf der Stromnetzinformation bestimmt wird, und wobei die Steuerungsinformation ferner derart bestimmt ist, dass die Stabilität des übergeordneten Stromnetzes gewährleistet werden kann; und
- Ausgeben oder Veranlassen des Ausgebens der bestimmten Steuerungsinformation.

2. Verfahren nach Anspruch 1, wobei die Sensorinformation basierend auf einer sensorischen Überwachung und/oder Messung des Ankoppelungspunktes erfasst wird.

3. Verfahren nach einem der vorhergehenden Ansprüche, wobei für den Fall, dass die Stromnetzinformation erhalten wird, diese zumindest einen Messwert des Ankoppelungspunktes zwischen dem Micro-Grid und dem Stromnetz repräsentiert, wobei ferner diese Stromnetzinformation seitens des Stromnetzes erfasst oder die Erfassung der Stromnetzinformation seitens des Stromnetzes veranlasst wird.

4. Verfahren nach einem der vorhergehenden Ansprüche, wobei der Messwert des Ankoppelungspunktes einen oder mehrere der folgenden Parameter i) bis v) repräsentiert:
i) Strom an dem zumindest einen Ankoppelungspunkt;
ii) Spannung an dem zumindest einen Ankoppelungspunkt;
iii) Leistungsbilanz an dem zumindest einen Ankoppelungspunkt;
iv) Wirk- und/oder Blindleistung; und
v) Wirk- und/oder Blindlast.

5. Verfahren nach einem der vorhergehenden Ansprüche, wobei das Ausgeben oder das Veranlassen des Ausgebens der Steuerungsinformation an zumindest ein Element des Micro-Grids erfolgt, wobei ferner eine Steuerung und/oder Regelung von diesem zumindest einen Element des Micro-Grids basierend auf der Steuerungsinformation erfolgt, an das die Steuerungsinformation ausgegeben oder an das die Ausgabe der Steuerungsinformation veranlasst wird.

6. Verfahren nach einem der vorhergehenden Ansprüche, wobei der Messwert des Ankoppelungspunktes zwischen dem Micro-Grid und dem Stromnetz von zumindest einer Sensorik erfasst wird, auf Basis des von der Sensorik ermittelten Messwertes ein Zustand des Stromnetzes wird.

7. Verfahren nach einem Anspruch 6, wobei der Zustand des Stromnetzes indikativ für eine Lastsituation des Stromnetzes ist, wobei die Steuerungsinformation ferner unter Berücksichtigung der Lastsituation und zur Gewährleistung der Stabilität des Stromnetzes bestimmt wird.

8. Verfahren nach einem Ansprüche 5 bis 7, wobei die Steuerung und/oder Regelung des zumindest einen Elementes des Micro-Grids derart erfolgt, dass eine Überlastung und/oder Grenzwertverletzung entgegenwirkende Aktion von dem Element durchgeführt wird.

9. Verfahren nach Anspruch 8, wobei die Überlastung und/oder Grenzwertverletzung von einer Betriebsmittelüberlastung und/oder Spannungsbandverletzung des Stromnetzes charakterisiert ist.

10. Verfahren nach einem der vorhergehenden Ansprüche, wobei die Steuerungsinformation ferner zumindest teilweise basierend auf einem oder mehreren vordefinierten Steuerungsparametern bestimmt wird.

11. Verfahren nach Anspruch 10, wobei der eine oder die mehreren vordefinierten Steuerungsparameter mit dem zumindest einen Element des Micro-Grids verknüpft sind, so dass durch die Ausgabe oder das Veranlassen der Ausgabe der Steuerungsinformation eine Steuerung und/oder Regelung des zumindest einen Elementes von dem Micro-Grid gemäß dem einen oder den mehreren vordefinierten Steuerungsparametern erfolgt.

12. Verfahren nach einem der vorhergehenden Ansprüche, ferner umfassend:
- Detektieren, dass eine Lastsituation des Stromnetzes vorliegt, die die Stabilität des Stromnetzes gefährdet, wobei das Detektieren in vordefinierten oder nach vorbestimmten Regeln bestimmten Zeitabständen erfolgt, und wobei das Detektieren das Ermitteln der Sensorinformation umfasst.

13. Verfahren nach einem der vorhergehenden Ansprüche, wobei das Erhalten der Stromnetzinformation auf Protokollebene zwischen dem Micro-Grid und dem Stromnetz, oder basierend auf von jeweiligen Sensoriken des Stromnetzes ermittelten Informationen, erfolgt.

14. Vorrichtung eingerichtet zur Ausführung und/oder Steuerung des Verfahrens nach einem der Ansprüche 1 bis 12 oder umfassend jeweilige Mittel zur Ausführung und/oder Steuerung der Schritte des Verfahrens nach einem der Ansprüche 1 bis 13.

15. System, umfassend eine oder mehrere Vorrichtung, die eingerichtet sind zur Ausführung und/oder Steuerung des Verfahrens nach einem der Ansprüche 1 bis 13 oder Mittel zur Ausführung und/oder Steuerung der Schritte des Verfahrens nach einem der Ansprüche 1 bis 13 aufweisen.

16. Computerprogramm, umfassend Programmanweisungen, die einen Prozessor zur Ausführung und/oder Steuerung des Verfahrens gemäß einem der Ansprüche 1 bis 13 veranlassen, wenn das Computerprogramm auf dem Prozessor läuft.
